# EUROPEAN PATENT APPLICATION

(11) **EP 4 406 878 A1**
(43) Date of publication of application: **31.07.2024**
(21) Application number: 22872662.6
(22) Date of filing: 31.08.2022
(51) Int. Cl.: B65G 1/00, B65G 1/04, B65G 1/137, G06Q 10/08

(54) **TRANSPORT PLAN GENERATION METHOD, TRANSPORT PLAN GENERATION DEVICE, PROGRAM, AND COMPUTER-READABLE STORAGE MEDIUM**

(30) Priority: 22.09.2021 JP 2021153854
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: ASARI, Yukio, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/032844
(87) International publication number: WO 2023/047906

(57) **Abstract**

A conveyance plan generation method according to an embodiment includes acquiring, first detecting, second detecting, generating and outputting. The acquiring acquires storage management information, a request for return, and a request for retrieval. The first detecting detects first positional information relating to a storage rack as a return destination candidate. The second detecting detects second positional information relating to a storage rack as a candidate. The generating generates a conveyance plan based on a maximum number of cases conveyed by the carrier and arrangement information that includes the first positional information and the second positional information. The outputting outputs the conveyance plan.

## Description

### FIELD

Embodiments of the invention disclosed herein relate generally to a conveyance plan generation method, a conveyance plan generation apparatus, a program, and a computer-readable storage medium.

### BACKGROUND

With the recent increase in efficiency in the distribution of goods, various techniques using an unmanned carrier called an automated guided vehicle (AGV) have been proposed. The AGV includes a loading space for loading a plurality of articles, and conveys a plurality of articles retrieved from a plurality of storage racks to a picking station or the like. When a control system receives an order, it instructs the AGV to convey a predetermined case in which a target item is stored based on the received order. Cases containing various items are stored in respective storage racks. The number of storage racks depends on the scale of the system, but is normally several hundred. The AGV heads for a predetermined storage rack based on an instruction from the control system and conveys a predetermined case stored in the predetermined storage rack to a picking station.

In the picking station, the target item designated by the order is picked from the conveyed predetermined case, and the target item is moved to a tray assigned for each order. The AGV conveys the predetermined case that has been processed from the picking station to a predetermined storage rack, and the conveyed predetermined case is returned to a storage rack.

### CITATION LIST

Patent Literature 1: Japanese Patent No. 6736788

### SUMMARY

### TECHNICAL PROBLEM

The AGV is responsible for conveying a case to be returned to a storage rack and conveying a case retrieved from a storage rack in one round. The maximum number of cases that can be loaded on the AGV is determined in advance. Thus, the number of cases conveyed for return in one round of the AGV is equal to or less than the maximum loading number, and the number of cases retrieved from a storage rack and conveyed is also equal to or less than the maximum loading number. In addition, if there is no empty space in the loading space of the AGV, a case retrieved from a storage rack cannot be loaded. The space of the picking station is limited, and it is desirable that the case that has been processed in the picking station be returned to a storage rack at an appropriate time. Under such conditions, there is a demand for more efficient conveyance of cases.

An object of the invention disclosed herein is to provide a conveyance plan generation method, a conveyance plan generation apparatus, a program, and a computer-readable storage medium capable of improving the efficiency in the conveyance of cases.

### SOLUTION TO PROBLEM

A conveyance plan generation method according to an embodiment includes acquiring, first detecting, second detecting, generating and outputting. The acquiring acquires storage management information, a request for return, and a request for retrieval, the storage management information indicating case storage states of a plurality of storage racks that store cases to be conveyed by a carrier, the request for return including identification information of a case to be returned to a storage rack, the request for retrieval including identification information of a case to be retrieved from a storage rack. The first detecting detects first positional information based on information indicating that no case is stored, the first positional information relating to a storage rack as a return destination candidate for a case to be conveyed and returned by the carrier from a case processing area to a storage rack area, the information indicating that no case is stored being included in the storage management information. The second detecting detects second positional information based on information indicating completion of case storage and the request for retrieval, the second positional information relating to a storage rack as a candidate from which a case to be conveyed by the carrier toward the case processing area is retrieved, the information indicating completion of case storage being included in the storage management information. The generating generates a conveyance plan based on a maximum number of cases conveyed by the carrier and arrangement information that includes the first positional information and the second positional information, the conveyance plan including information for designating a case to be conveyed and returned by the carrier in one round, a storage rack as a return destination, and a case to be retrieved. The outputting outputs the conveyance plan.

### BRIEF DESCRIPTION OF THE DRAWINGS

FIG. 1 is a top view of a distribution center as an example of application of an article conveyance system according to an embodiment.
FIG. 2 is a diagram showing a schematic configuration of the article conveyance system according to an embodiment.
FIG. 3 is a diagram showing a schematic configuration of a conveyance plan generation server according to an embodiment.
FIG. 4 is a block diagram showing an example of an AGV control device according to an embodiment.
FIG. 5 is a block diagram showing an example of an AGV according to an embodiment.
FIG. 6 is a flowchart showing an example of a conveyance plan generation process performed by the conveyance plan generation server according to an embodiment.
FIG. 7 is a flowchart showing an example of a conveyance plan generation process performed by the conveyance plan generation server according to an embodiment.
FIG. 8 is a diagram showing an example of conveyance based on a conveyance plan according to an embodiment.

### DETAILED DESCRIPTION

Hereinafter, embodiments will be described with reference to the drawings.

### [Configuration]

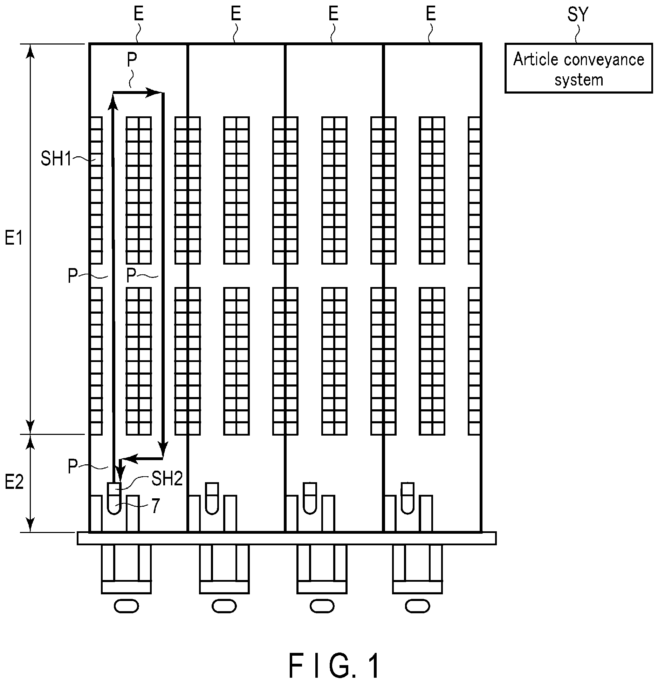

FIG. 1 is a top view of a distribution center as an example of application of an article conveyance system according to an embodiment.

An article conveyance system SY manages articles in a distribution center and controls the conveyance of the articles. A plurality of storage areas E are arranged in the distribution center, and each storage area E includes a storage rack area E1 and a case processing area E2.

A plurality of storage racks SH1 are arranged in the storage rack area E1. For example, the storage rack SH1 has a plurality of storage sections in a vertical direction, and one storage section stores one case. That is, with a plurality of storage sections, one storage rack SH1 stores a plurality of cases. The storage rack SH1 may have one storage section and store one case in one storage section. A case transfer port of a picking station is arranged in the case processing area E2.

In the storage area E, a passage P is arranged through which an unmanned carrier called an automated guided vehicle (AGV) travels. The passage P is a passage that connects the storage racks SH1 in the storage rack area E1 and the case transfer port in the case processing area E2. For example, the passage P is an annular passage that is arranged along the storage racks SH1 and connects the storage racks SH1 in the storage rack area E1 and the case transfer port in the case processing area E2.

An AGV 6 loads a case to be returned and travels from the case processing area E2 to the storage rack area E1 through the passage P, and further loads a retrieved case and travels from the storage rack area E1 to the case processing area E2 through the passage P. Alternatively, the AGV 6 loads a retrieved case and travels from the storage rack area E1 to the case processing area E2 through the passage P, and further loads a case to be returned and travels from the case processing area E2 to the storage rack area E1 through the passage P. The AGV 6 travels clockwise (in a forward direction) or counterclockwise (in a reverse direction) on the annular passage P. The order of access to the plurality of storage racks SH1 arranged in the storage rack area E1 varies depending on the traveling direction.

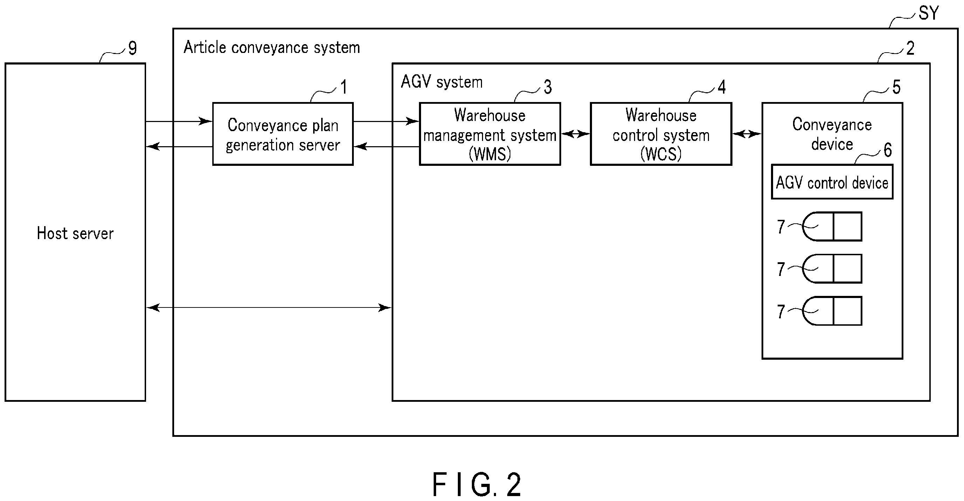

FIG. 2 is a diagram showing a schematic configuration of the article conveyance system according to an embodiment.

As shown in FIG. 2, the article conveyance system SY includes a conveyance plan generation server 1 and an AGV system 2, and the AGV system 2 includes a warehouse management system (WMS) 3, a warehouse control system (WCS) 4, and a conveyance device 5. The conveyance device 5 includes an AGV control device 6 and an AGV 7. The article conveyance system SY receives an order from a host server 9 and controls the conveyance of an article based on the order. The AGV system 2 may include the conveyance plan generation server 1, or the host server 9 may include the conveyance plan generation server 1.

The conveyance plan generation server 1 corresponds to a conveyance plan generation apparatus, detects which case is stored in which storage section of which storage rack SH1 and which article is stored in which case based on storage management information and article management information provided from the warehouse management system 3, and generates and outputs a conveyance plan based on the detected information, the loading capacity of the AGV 7 (the maximum number of cases conveyed), and the order (a request for returning a case and a request for retrieving a case) from the host server 9. A conveyance plan generation method using the conveyance plan generation server 1 will be detailed later.

The warehouse management system 3 can be realized by one or more computers, and manages the storage and retrieval of a designated case in and from a warehouse, that is, the storage and retrieval of an article stored in the designated case in and from a warehouse, based on the conveyance plan from the conveyance plan generation server 1. The warehouse management system 3 stores storage management information and article management information.

The storage management information indicates the positions of the plurality of storage racks SH1, the positions of the plurality of storage sections included in the storage racks SH1, and the case storage states of the plurality of storage racks SH1 based on the identification information of the storage racks SH1, the identification information of the storage sections included in the storage racks SH1, and the identification information of the cases. For example, identification information such as a barcode is given to the cases. That is, the storage management information includes information indicating which case is stored in which storage section of which storage rack SH1, and which storage section of which storage rack SH1 is empty. The storage management information further includes a storage destination history of each case. The storage destination history of each case includes information indicating in which storage section of which storage rack SH1 each case was stored in the past, and further includes information indicating the initial storage position. The storage destination history enables detection of the storage transition of each case. The article management information includes information indicating which article is stored in which case and which case is empty based on the identification information of the cases and the identification information of the articles. For example, identification information such as a barcode is given to the articles.

The warehouse control system 4 can be realized by one or more computers, and controls the storage and retrieval of a designated case in and from a warehouse, that is, the storage and retrieval of an article stored in a designated case in and from a warehouse, in cooperation with the control device 5 of the entire warehouse based on the conveyance plan from the conveyance plan generation server 1. For example, the warehouse control system 4 generates a control signal for controlling the travel of the AGV 7 based on the conveyance plan from the conveyance plan generation server 1, and transmits the control signal to the AGV control device 6.

The AGV control device 6 can be realized by one or more computers, receives a control signal from the warehouse control system 4, outputs the control signal to the AGV 7, and controls the conveyance of the case by the AGV 7, that is, the conveyance of the article stored in the designated case by the AGV 7.

The AGV 7 is a self-propelled robot and operates based on a control signal from the AGV control device 6. The AGV 7 includes a movable rack SH2 on which a plurality of articles are loaded. For example, the movable rack SH2 has a plurality of storage sections in a vertical direction, and one storage section stores one case. That is, with a plurality of storage sections, one movable rack SH2 stores a plurality of cases. The AGV 6 loads a retrieved case and a case to be returned on the movable rack SH2 and travels through the passage P.

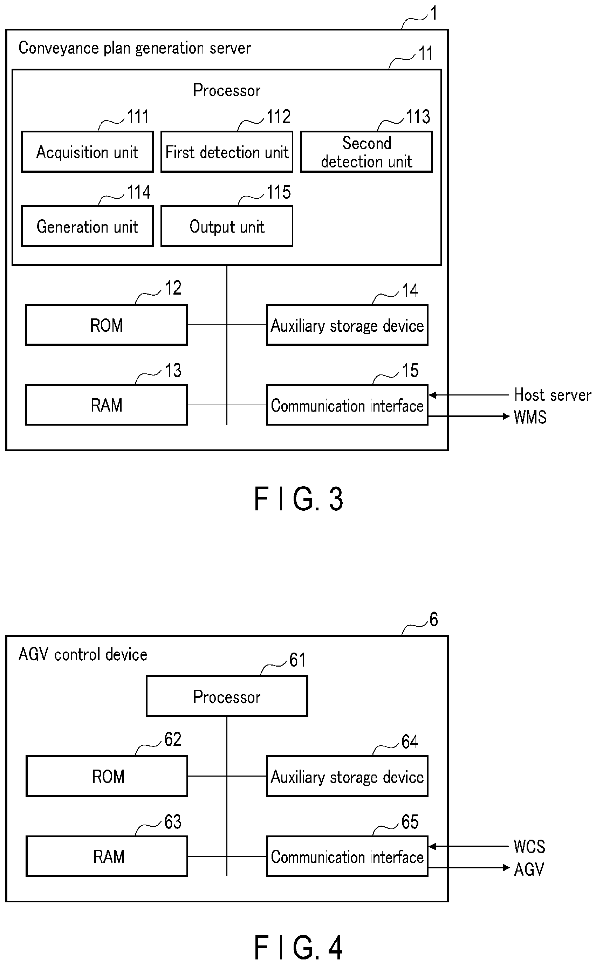

FIG. 3 is a diagram showing a schematic configuration of a conveyance plan generation server according to an embodiment.

As shown in FIG. 3, the conveyance plan generation server 1 is configured by one or more computers. For example, the conveyance plan generation server 1 includes a processor 11, a ROM 12, a RAM 13, an auxiliary storage device 14, and a communication interface 15.

The processor 11 is a central processing unit (CPU) or the like, and serves as a central part of a computer that performs calculation or the like necessary for generating a conveyance plan. The processor 11 implements the functions of the respective units such as an acquisition unit 111, a first detection unit 112, a second detection unit 113, a generation unit 114, and an output unit 115 by executing a program stored in the ROM 12 or the like. The acquisition unit 111, the first detection unit 112, the second detection unit 113, the generation unit 114, the output unit 115, and the like may be implemented by hardware such as a large scale integration (LSI), an application specific integrated circuit (ASIC), and a field-programmable gate array (FPGA) having the same function as the processor 11 executing the program.

The acquisition unit 111 acquires the storage management information transmitted from the warehouse management system 3. The storage management information indicates the case storage states of the plurality of storage racks SH1 that store the cases conveyed by the AGV 7. For example, if a first storage section among a plurality of storage sections of a predetermined storage rack SH1 is storing a case and a second storage section among the plurality of storage sections of the predetermined storage rack SH1 is not storing a case, predetermined storage management information corresponding to the predetermined storage rack SH1 includes identification information of the predetermined storage rack SH, identification information of the first storage section, and information indicating completion of case storage (e.g., flag 1), and includes identification information of the second storage section and information indicating no case is stored (e.g., flag 0). If a predetermined storage rack SH1 includes one predetermined storage section and the predetermined storage section is storing a case, predetermined storage management information corresponding to the predetermined storage rack SH1 includes identification information of the predetermined storage rack SH and information indicating completion of case storage. In addition, if a predetermined storage rack SH1 includes one predetermined storage section and the predetermined storage section is not storing a case, predetermined storage management information corresponding to the predetermined storage rack SH1 includes identification information of the predetermined storage rack SH and information indicating no case is stored.

The acquisition unit 111 acquires an order transmitted from the host server 9. The order includes a request for return and a request for retrieval. The request for return is information for designating one or more cases (that is, one or more articles) to be returned to the storage rack SH1, and includes identification information of the case(s) to be returned and identification information of the article(s) stored in the case(s). The request for retrieval is information for designating one or more cases (that is, one or more articles) to be retrieved from the storage rack SH1, and includes identification information of the case(s) to be retrieved and identification information of the article(s) to be stored in the case(s).

The first detection unit 112 detects first positional information indicating a non-storage section in which no case is stored based on the information indicating no case is stored included in the storage management information. The first positional information is positional information relating to a storage rack SH1 as a return destination candidate for a case that is conveyed by the AGV 7 from the case processing area E2 toward the storage rack area E1 and returned.

The second detection unit 113 detects second positional information relating to a storage rack SH1 as a candidate from which a case to be conveyed by the AGV 7 toward the case processing area is retrieved based on the information indicating completion of case storage included in the storage management information and the request for retrieval.

The generation unit 114 generates a conveyance plan based on the maximum number of cases conveyed by the AGV 7 and arrangement information including the first positional information and the second positional information. The maximum number of cases conveyed may be read as the maximum number of cases loaded. The conveyance plan includes information for designating a case to be conveyed and returned by the AGV 7 in one round, a storage rack as a return destination, and a case to be retrieved.

The output unit 115 outputs the generated conveyance plan.

The ROM 12 is a non-transitory computer-readable storage medium and stores the aforementioned program. The ROM 12 stores, for example, data for use by the processor 11 to perform various processes or various setting values. The RAM 13 is a memory for data read and data write. The RAM 13 is used as a so-called work area or the like in which data that the processor 11 temporarily uses when performing various processes is stored.

The auxiliary storage device 14 is a non-transitory computer-readable storage medium and may store the aforementioned program. The auxiliary storage device 14 stores data for use by the processor 11 to perform various processes, data generated by the processes performed by the processor 11, various setting values, or the like. For example, the auxiliary storage device 14 stores the order from the host server 9, the arrangement information of the distribution center, the storage management information updated according to the movement of the case(s), the maximum loading capacity (including the maximum number of cases conveyed) of the AGV 7, the frequency of retrieving the case(s), and the like.

The conveyance plan generation server 1 may be transferred in a state in which the above program is stored in the ROM 12, or the conveyance plan generation server 1 may be transferred in a state in which the above program is not stored. In the latter case, the conveyance plan generation server 1 reads the program stored in a removable storage medium such as an optical disk or a semiconductor memory, and writes the read program in the auxiliary storage device 14. Alternatively, the conveyance plan generation server 1 downloads the program via a network or the like and writes the downloaded program in the auxiliary storage device 14.

The communication interface 15 receives an order transmitted from the host server 9 and storage management information transmitted from the warehouse management system 3. The communication interface 15 transmits a conveyance plan output from the output unit 115 to the warehouse management system 3.

FIG. 4 is a block diagram showing an example of an AGV control device according to an embodiment.

The AGV control device 6 is configured by one or more computers. For example, the AGV control device 6 includes a processor 61, a ROM 62, a RAM 63, an auxiliary storage device 64, and a communication interface 65.

The processor 61 is a CPU or the like and serves as a central part of a computer that performs calculation and the like necessary for controlling the AGV 7. The processor 61 implements the control of the AGV 7 by executing a program stored in the ROM 62 or the like.

The ROM 62 is a non-transitory computer-readable storage medium and stores the aforementioned program. The ROM 62 stores, for example, data for use by the processor 11 to perform various processes or various setting values. The RAM 63 is a memory for data read and data write. The RAM 63 is used as a so-called work area or the like in which data that the processor 61 temporarily uses when performing various processes is stored.

The auxiliary storage device 64 is a non-transitory computer-readable storage medium and may store the aforementioned program. The auxiliary storage device 64 stores data for use by the processor 61 to perform various processes, data generated by the processes performed by the processor 61, various setting values, or the like.

The communication interface 65 receives a control signal from the warehouse control system 4 and transmits the control signal to the AGV 7.

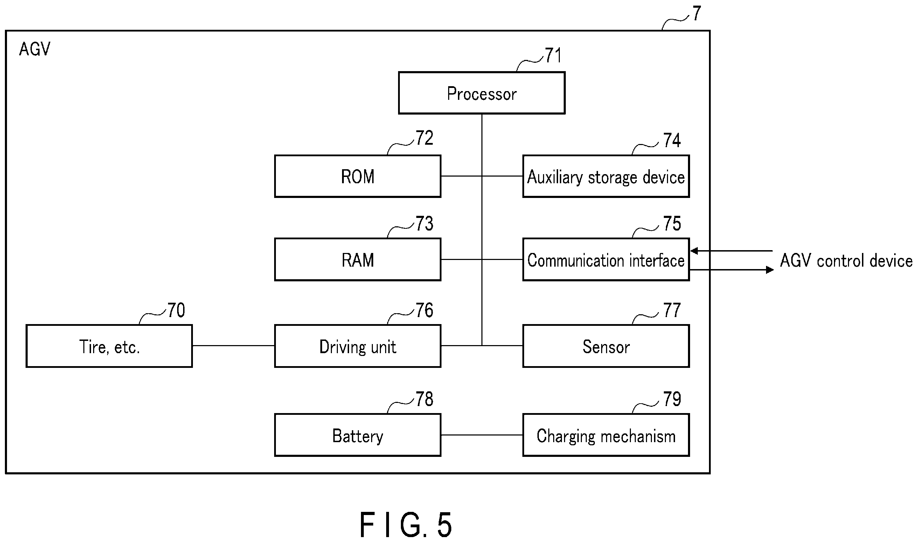

FIG. 5 is a block diagram showing an example of an AGV according to an embodiment.

The AGV 7 includes a processor 71, a ROM 72, a RAM 73, an auxiliary storage device 74, a communication interface 75, a driving unit 76, a sensor 77, a battery 78, a charging mechanism 79, a tire 70, and the like.

The processor 71 is a CPU or the like and serves as a central part of a computer that performs processing such as calculation and control necessary for operations such as acceleration, deceleration, stopping, and direction change. The processor 71 generates and outputs a drive signal by executing a program stored in the ROM 72 or the like based on a control signal from the AGV control device 6.

For example, the AGV control device 6 transmits a control signal for moving the AGV 7 from a current position (the case transfer port of the picking station) to a first position (a position of a target storage rack SH1) and from the first position to a second position (the case transfer port of the picking station). The processor 71 outputs a drive signal corresponding to the control signal transmitted from the AGV control device 6. Thus, the AGV 7 moves from the current position to the first position and from the first position to the second position.

The ROM 72 is a non-transitory computer-readable storage medium and stores the aforementioned program. The ROM 72 stores, for example, data for use by the processor 71 to perform various processes or various setting values. The RAM 73 is a memory for data read and data write. The RAM 73 is used as a so-called work area or the like in which data that the processor 71 temporarily uses when performing various processes is stored.

The auxiliary storage device 74 is a non-transitory computer-readable storage medium and may store the aforementioned program. The auxiliary storage device 74 stores data for use by the processor 71 to perform various processes, data generated by the processes performed by the processor 71, various setting values, or the like.

The communication interface 75 receives a control signal from the AGV control device 6.

The driving unit 76 is a motor or the like, and the motor is rotated or stopped based on a drive signal output from the processor 71. The power of the motor is transmitted to the tire 70, and the power of the motor is transmitted to a steering mechanism. The AGV 7 is moved to a target position by the power from the motor.

The sensor 77 is a plurality of reflection sensors. Each reflection sensor is mounted around the AGV 7. Each reflection sensor emits a laser beam, detects a time from emission of the laser beam to return of the laser beam reflected by an object, senses a distance to the object based on the detected time, and notifies the processor 71 of a sensing signal. The processor 71 outputs a control signal for controlling the travel of the AGV 7 based on the sensing signal from the sensor 77. For example, based on the sensing signal from the sensor 77, the processor 71 outputs a control signal for deceleration, stopping, or the like to avoid collision with the object. A camera may be provided in addition to the sensor 77, and the camera may capture an image of the surroundings and output the captured image to the processor 71. In this case, the processor 71 analyzes the captured image and outputs a control signal for deceleration, stopping, or the like to avoid collision with the object.

The battery 78 supplies necessary electric power to the driving unit 76 or the like. The charging mechanism 79 is a mechanism that connects a charging station and the battery 78, and the battery 78 is charged with electric power supplied from the charging station through the charging mechanism 79.

### [Operation]

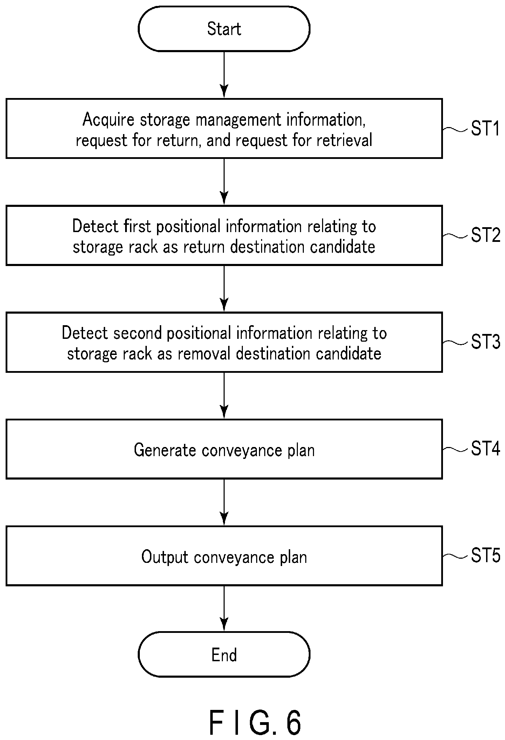

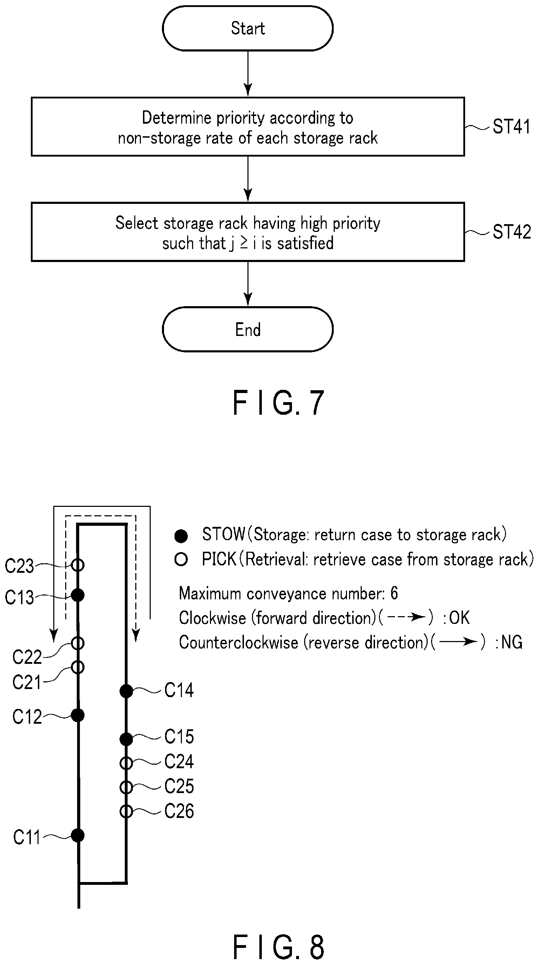

FIGS. 6 and 7 are flowcharts respectively showing an example of a conveyance plan generation process performed by the conveyance plan generation server according to an embodiment.

In the processor 11, the acquisition unit 111 acquires storage management information, article management information, a request for return, and a request for retrieval (ST1). The warehouse management system 3 stores the storage management information and the article management information, updates the storage management information according to the storage state of the case in the storage rack SH1, and updates the article management information according to the storage state of the article in the case. The communication interface 15 receives the storage management information and the article management information transmitted from the warehouse management system 3, and the acquisition unit 111 acquires the storage management information and the article management information via the communication interface 15. The host server 9 transmits an order including a request for return and a request for retrieval. The communication interface 15 receives the order transmitted from the host server 9, and the acquisition unit 111 acquires the order via the communication interface 15.

The storage management information indicates the case storage states of the plurality of storage racks SH1 that store the cases conveyed by the AGVs. The request for return is information for designating one or more cases (that is, one or more articles) to be returned to the storage rack SH1, and includes identification information of the case(s) to be returned and identification information of the article(s) to be stored in the case(s). The request for retrieval is information for designating one or more cases (that is, one or more articles) to be retrieved from the storage rack SH1, and includes identification information of the case(s) to be retrieved and identification information of the article(s) to be stored in the case(s).

The first detection unit 112 detects first positional information indicating a non-storage section in which no case is stored based on the information indicating no case is stored included in the storage management information (ST2). The first positional information is positional information relating to a storage rack SH1 as a return destination candidate for the case that is conveyed by the AGV 7 from the case processing area E2 to the storage rack area E1 and returned.

The second detection unit 113 detects second positional information relating to a storage rack SH1 as a candidate from which a case to be conveyed by the AGV 7 toward the case processing area is retrieved based on the information indicating completion of case storage included in the storage management information and the request for retrieval (ST3). Alternatively, the second detection unit 113 may detect the second positional information based on the information indicating completion of case storage included in the storage management information, the article management information, and the request for retrieval. In this case, the correspondence between an article and a case that stores the article can be checked.

The generation unit 114 generates a conveyance plan based on the maximum number of cases conveyed by the AGV 7 and arrangement information including the first positional information and the second positional information (ST4). The output unit 115 outputs the generated conveyance plan (ST5). By using the first positional information, it is possible to select a return destination with high flexibility focusing on an empty space of the storage rack SH1, and to improve the efficiency in the conveyance performed by the AGV 7 in one round.

An example of generation of a conveyance plan will be described with reference to FIG. 7.

The generation unit 114 determines the priority according to the non-storage rate of each storage rack SH1 (ST41). For example, the generation unit 114 assigns a high priority to a storage rack SH1 having a large number of empty storage sections, and assigns a low priority to a storage rack SH1 having a small number of empty storage sections.

The generation unit 114 defines the order number i of the position of a storage rack SH1 that stores a case to be retrieved and the number j of empty spaces in a storage rack SH1 as a storage destination of a case to be returned which arrives before the order number i, selects a storage rack SH1 having a high priority such that j ≥ i is always satisfied (ST42), and generates the conveyance plan. Thus, the AGV 7 can load all the cases to be retrieved.

The generated conveyance plan includes identification information of a case that is conveyed and returned by the AGV 7 in one round, identification information of a storage rack SH1 as a return destination, identification information of a case to be retrieved, a conveyance route, and information indicating the order of the return and retrieval of the cases.

The generation of the conveyance plan will be described below by showing several examples. The examples shown below can be implemented in appropriate combination.

In the embodiment disclosed herein, the maximum number of cases conveyed by the AGV 7 is defined as N (N: an integer of 2 or more), the number of cases to be returned that are loaded in one round of the AGV 7 is defined as nr (nr ≤ N), and the number of cases to be retrieved that are loaded in one round of the AGV is defined as nc (nc ≤ N). The conveyance plan generation server 1 optimizes nr and nc so that Znr ≥ Σnc is satisfied at a certain observation time point ti.

For example, the generation unit 114 uses the maximum conveyance number N of the AGV 7 and the arrangement information when generating the conveyance plan. As the arrangement information, first positional information on a storage rack SH1 as a return destination candidate for a case and second positional information on a storage rack SH1 as a candidate from which N case(s) are retrieved are used. Further, as the arrangement information, the positional information of the plurality of storage racks SH1, the positional information of the passage P around the plurality of storage racks SH1, and the positional information of the case processing area E2 are used. The positional information of the case processing area E2 includes positional information of the case transfer port of the picking station.

For example, the generation unit 114 optimizes a case to be returned, a storage rack SH1 as a return destination, a case to be retrieved, a conveyance route, and the order of return and retrieval of the cases based on the maximum conveyance number N of the AGV 7 and the arrangement information, and generates a conveyance plan such that the total value of the cases to be returned and the cases to be retrieved that are simultaneously conveyed by the AGV 7 does not exceed the maximum conveyance number N in a process of conveyance performed by the AGV 7 in one round. Furthermore, the generation unit 114 generates a conveyance plan so as to maximize the total value in a process of conveyance performed by the AGV 7 in one round.

The generation unit 114 may generate a conveyance plan by prioritizing a certain parameter. For example, the generation unit 114 may generate a conveyance plan by prioritizing the maximum conveyance number N. Alternatively, the generation unit 114 may generate a conveyance plan such that a maximum number of cases are retrieved within a possible range after a return destination of a maximum number of cases for which warehousing is prioritized is specified. Alternatively, the generation unit 114 may generate a conveyance plan such that a maximum number of cases are returned within a possible range after a storage rack is specified from which a maximum number of cases for which dispatching is prioritized are retrieved.

A case where dispatching from a warehouse is prioritized will be described. The generation unit 114 performs the above-described optimization on the condition that the retrieved cases cannot be collected if there is no empty space in the loading space of the AGV 7, based on the first positional information relating to a storage rack SH1 as a return destination candidate for a case to be returned and the second positional information relating to a storage rack SH1 as a candidate from which a case is retrieved. For example, the generation unit 114 selects a case to be returned, a storage rack SH1 as a return destination, a case to be collected, a conveyance route, and the order of the return and retrieval of the cases such that the number of retrieved cases that cannot be collected is minimal, and generates a conveyance plan based on the result of the selection. This enables efficient conveyance with priority given to dispatching from a warehouse.

In addition, if there is a retrieved case that cannot be collected due to a selection made, the generation unit 114 generates a conveyance plan for the next round so that the retrieved case that cannot be collected is collected in the next round. For example, if there are m retrieved cases that cannot be collected, the generation unit 114 generates a conveyance plan excluding the first to the m-th cases to be returned.

A case where warehousing is prioritized will be described. The generation unit 114 performs the above-described optimization on the condition that the retrieved cases cannot be collected if there is no empty space in the loading space of the AGV 7, based on the first positional information relating to a storage rack SH1 as a return destination candidate for a case to be returned and the second positional information relating to a storage rack SH1 as a candidate from which a case is retrieved. For example, the generation unit 114 selects a case to be returned, a storage rack SH1 as a return destination, a case to be collected, a conveyance route, and the order of the return and retrieval of the cases such that the number of cases to be returned is maximal, and generates a conveyance plan based on the result of the selection. This enables efficient conveyance with priority given to warehousing.

The storage management information may include a case non-storage rate of each storage rack SH1, and the generation unit 114 may generate a conveyance plan including information for designating a storage rack SH1 having a case non-storage rate higher than a first threshold as a return destination. If a specific storage rack SH1 approaches a full state or becomes full with a decrease in its case non-storage rate, no case can be stored in the specific storage rack SH1. Cases are prevented from being returned to a specific storage rack SH1 in a concentrated manner so that any storage rack SH1 can be selected as a storage destination among the plurality of storage racks SH1 included in the storage rack area E1. That is, the case storage is dispersed by the plurality of storage racks SH1. This increases the number of choices for a case return destination, thus leading to improved efficiency in the case processing.

Alternatively, by focusing on the number of empty spaces in each storage rack SH1, a priority may be assigned to each storage rack SH1 in descending order of the number of empty spaces, and the generation unit 114 may select a storage rack SH1 to be a return destination based on the priority assigned to each storage rack SH1. For example, the generation unit 114 prioritizes selection of a storage rack SH1 having a large number of empty spaces as a return destination. That is, the case storage is dispersed by the plurality of storage racks SH1. This increases the number of choices for a case return destination, thus leading to improved efficiency in the case processing.

The storage management information may include rack-group case non-storage rates of two or more adjacent groups of storage racks, and the generation unit 114 may generate a conveyance plan including information for designating a storage rack SH1 included in a group of storage racks having a rack-group case non-storage rate higher than a second threshold as a return destination. Thus, priority is given to designation of a group of storage racks having a high case non-storage rate, that is, a place where empty storage racks SH1 are gathered, as a return destination. If a specific group of storage racks approaches a full state or becomes full with a decrease in its case non-storage rate, no case can be stored in the specific group of storage racks. Cases are prevented from being returned to a specific group of storage racks in a concentrated manner so that any group of storage racks can be selected as a storage destination among the plurality of storage racks SH1 included in the storage rack area E1. That is, the case storage is dispersed by the plurality of storage racks SH1. This increases the number of choices for a case return destination, thus leading to improved efficiency in the case processing.

Alternatively, by focusing on the number of empty spaces in two or more adjacent groups of storage racks, a priority may be assigned to each group of storage racks in descending order of the number of empty spaces, and the generation unit 114 may select a storage rack SH1 to be a return destination based on the priority assigned to each group of storage racks. For example, the generation unit 114 prioritizes selection of a group of storage racks having a large number of empty spaces as a return destination. That is, the case storage is dispersed by the plurality of storage racks SH1. This increases the number of choices for a case return destination, thus leading to improved efficiency in the case processing.

The generation unit 114 may generate a conveyance plan that includes information for prioritizing, as a return destination of a predetermined case retrieved from a predetermined storage rack SH1, designation of a place near the same predetermined storage rack SH1 (original storage rack SH1). That is, the generation unit 114 may generate a conveyance plan that includes information for prioritizing, as a return destination of a predetermined case retrieved from a predetermined storage rack SH1, designation of a storage rack SH1 included in a predetermined range of distance from the same predetermined storage rack SH1 (original storage rack SH1).

For example, the generation unit 114 may assign a priority to the storage racks SH1 as return destination candidates according to the distances from the original storage rack SH1, select a storage rack SH1 as a return destination based on the priority, and generate a conveyance plan. This makes it possible to maintain a storage layout of the cases to some extent. If a storage layout of the cases is determined based on the frequency of retrieving the cases and the like, maintaining the storage layout of the cases can improve the efficiency in the storage and retrieval of the cases.

The generation unit 114 may generate a conveyance plan that includes information for prioritizing, as a return destination of a predetermined case retrieved from a predetermined storage rack SH1, designation of the same predetermined storage rack SH1 (original storage rack SH1). The generation unit 114 may also generate a conveyance plan that includes information for prioritizing designation of an initial storage position as a return destination of a predetermined case. Priority is given to the returning of a predetermined case to an initial storage position during repetition of the retrieval and returning even after the case is temporarily stored in a storage rack SH1 different from a predetermined storage rack SH1. This makes it possible to maintain a storage layout of the cases to some extent. If a storage layout of the cases is determined based on the frequency of retrieving the cases and the like, maintaining the storage layout of the cases can improve the efficiency in the storage and retrieval of the cases.

In addition, if the auxiliary storage device 14 stores the frequency of retrieving each case, the generation unit 114 may generate a conveyance plan that includes information for designating a return destination according to the frequency of retrieving each case. The conveyance plan includes information for designating a storage rack SH1 close to the case transfer port of the picking station as a return destination for the cases having a high frequency of storing and retrieving the cases, and designating a storage rack SH1 far from the case transfer port of the picking station as a return destination for the cases having a low frequency of storing or retrieving the cases. This leads to improved efficiency in the storage and retrieval of the cases.

The warehouse management system 3 manages the storage and retrieval of a designated case in and from a warehouse, that is, the storage and retrieval of an article stored in the designated case in and from a warehouse, based on the conveyance plan from the conveyance plan generation server 1. For example, the warehouse control system 4 generates a control signal for controlling the travel of the AGV 7 based on the conveyance plan from the conveyance plan generation server 1, and transmits the control signal to the AGV control device 6. The AGV 7 travels along an optimum route based on the control signal generated from the conveyance plan. This leads to improved efficiency in the conveyance of the cases.

FIG. 8 is a diagram showing an example of conveyance based on a conveyance plan according to an embodiment.

For example, assuming that the maximum conveyance number of the AGV 7 is N = 6, that the number of cases to be returned is 5 (cases C11 to C15), and the number of cases to be retrieved is 6 (cases C21 to C26), as shown in FIG. 7, the clockwise direction (forward direction) or the counterclockwise direction (reverse direction) can be selected.

The generation unit 114 selects the clockwise direction based on the maximum number of cases conveyed by the AGV 7 and the arrangement information, and generates a conveyance plan. The generated conveyance plan includes instructions to return the case C11, return the case C12, retrieve (load) the case C21, retrieve (load) the case C22, return the case C13, retrieve (load) the case C23, return the case C14, return the case C15, retrieve (load) the case C24, retrieve (load) the case C25, and retrieve (load) the case C26, in the mentioned order. In the counterclockwise direction, the total number of cases to be returned and cases to be retrieved cannot be maximized.

According to the embodiment disclosed herein, a return destination is flexibly selected by focusing on the empty space of the storage rack SH1, whereby the efficiency in the one-round conveyance performed by the AGV 7 can be improved. Thus, it is possible to secure sufficient conveyance efficiency even if the number of AGVs 7 is minimized.

The program according to the embodiment disclosed herein may be transferred in a state of being stored in an electronic device or in a state of not being stored in an electronic device. In the latter case, the program may be transferred through a network or may be transferred in a state of being stored in a storage medium. The storage medium is a non-transitory tangible medium. The storage medium is a computer-readable medium. The storage medium may be of any type, such as a CD-ROM or a memory card, as long as it can store programs and can be read by the computer.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope and spirit of the inventions.

## Claims

1. A conveyance plan generation method comprising:
acquiring storage management information, a request for return, and a request for retrieval, the storage management information indicating case storage states of a plurality of storage racks that store cases to be conveyed by a carrier, the request for return including identification information of a case to be returned to a storage rack, the request for retrieval including identification information of a case to be retrieved from a storage rack;
detecting first positional information based on information indicating that no case is stored, the first positional information relating to a storage rack as a return destination candidate for a case to be conveyed and returned by the carrier from a case processing area to a storage rack area, the information indicating that no case is stored being included in the storage management information;
detecting second positional information based on information indicating completion of case storage and the request for retrieval, the second positional information relating to a storage rack as a candidate from which a case to be conveyed by the carrier toward the case processing area is retrieved, the information indicating completion of case storage being included in the storage management information;
generating a conveyance plan based on a maximum number of cases conveyed by the carrier and arrangement information that includes the first positional information and the second positional information, the conveyance plan including information for designating a case to be conveyed and returned by the carrier in one round, a storage rack as a return destination, and a case to be retrieved; and
outputting the conveyance plan.

2. The conveyance plan generation method according to claim 1, wherein
each of the storage racks includes a plurality of storage sections for storing a plurality of cases, and
the carrier conveys a movable rack that includes a plurality of storage sections for storing the maximum number of cases conveyed.

3. The conveyance plan generation method according to claim 1 or 2, wherein the arrangement information includes positional information of the plurality of storage racks, positional information of a passage around the plurality of storage racks, and positional information of the case processing area.

4. The conveyance plan generation method according to any one of claims 1 to 3, wherein the conveyance plan includes information for designating a conveyance route of the carrier and an order of returning and retrieving a case.

5. The conveyance plan generation method according to any one of claims 1 to 4, wherein the conveyance plan includes information for prioritizing designation of a case to be returned over designation of a case to be retrieved.

6. The conveyance plan generation method according to any one of claims 1 to 4, wherein the conveyance plan includes information for prioritizing designation of a case to be retrieved over designation of a case to be returned.

7. The conveyance plan generation method according to any one of claims 1 to 6, wherein
the storage management information includes a case non-storage rate of each storage rack, and
the conveyance plan includes information for designating, as a return destination, a storage rack having a case non-storage rate higher than a first threshold.

8. The conveyance plan generation method according to any one of claims 1 to 6, wherein
the storage management information includes rack-group case non-storage rates of two or more adjacent groups of storage racks, and
the conveyance plan includes information for designating, as a return destination, a storage rack included in a group of storage racks having a rack-group case non-storage rate higher than a second threshold.

9. The conveyance plan generation method according to any one of claims 1 to 6, wherein the conveyance plan includes information for prioritizing designation of a storage rack included in a predetermined distance range from a predetermined storage rack as a return destination of a case retrieved from the predetermined storage rack.

10. The conveyance plan generation method according to any one of claims 1 to 6, wherein the conveyance plan includes information for designating a return destination according to a frequency of retrieving each case.

11. The conveyance plan generation method according to claim 1, wherein the conveyance plan is generated such that in a process of one-round conveyance performed by the carrier, a total value of cases to be returned and cases to be retrieved that are simultaneously conveyed by the carrier does not exceed the maximum number of cases conveyed.

12. The conveyance plan generation method according to claim 11, wherein the conveyance plan is generated so as to maximize the total value in the process of one-round conveyance performed by the carrier.

13. A conveyance plan generation apparatus comprising:
an acquisition unit configured to acquire storage management information, a request for return, and a request for retrieval, the storage management information indicating case storage states of a plurality of storage racks that store cases to be conveyed by a carrier, the request for return including identification information of a case to be returned to a storage rack, the request for retrieval including identification information of a case to be retrieved from a storage rack;
a first detection unit configured to detect first positional information based on information indicating that no case is stored, the first positional information relating to a storage rack as a return destination candidate for a case to be conveyed and returned by the carrier from a case processing area to a storage rack area, the information indicating that no case is stored being included in the storage management information;
a second detection unit configured to detect second positional information based on information indicating completion of case storage and the request for retrieval, the second positional information relating to a storage rack as a candidate from which a case to be conveyed by the carrier toward the case processing area is retrieved, the information indicating completion of case storage being included in the storage management information;
a generation unit configured to generate a conveyance plan based on a maximum number of cases conveyed by the carrier and arrangement information that includes the first positional information and the second positional information, the conveyance plan including information for designating a case to be conveyed and returned by the carrier in one round, a storage rack as a return destination, and a case to be retrieved; and
an output unit configured to output the conveyance plan.

14. A program for causing a computer to perform:
a procedure of acquiring storage management information, a request for return, and a request for retrieval, the storage management information indicating case storage states of a plurality of storage racks that store cases to be conveyed by a carrier, the request for return including identification information of a case to be returned to a storage rack, the request for retrieval including identification information of a case to be retrieved from a storage rack;
a procedure of detecting first positional information based on information indicating that no case is stored, the first positional information relating to a storage rack as a return destination candidate for a case to be conveyed and returned by the carrier from a case processing area to a storage rack area, the information indicating that no case is stored being included in the storage management information;
a procedure of detecting second positional information based on information indicating completion of case storage and the request for retrieval, the second positional information relating to a storage rack as a candidate from which a case to be conveyed by the carrier toward the case processing area is retrieved, the information indicating completion of case storage being included in the storage management information;
a procedure of generating a conveyance plan based on a maximum number of cases conveyed by the carrier and arrangement information that includes the first positional information and the second positional information, the conveyance plan including information for designating a case to be conveyed and returned by the carrier in one round, a storage rack as a return destination, and a case to be retrieved; and
a procedure of outputting the conveyance plan.

15. A non-transitory computer-readable storage medium storing a program for causing a processor to perform:
acquiring storage management information, a request for return, and a request for retrieval, the storage management information indicating case storage states of a plurality of storage racks that store cases to be conveyed by a carrier, the request for return including identification information of a case to be returned to a storage rack, the request for retrieval including identification information of a case to be retrieved from a storage rack;
detecting first positional information based on information indicating that no case is stored, the first positional information relating to a storage rack as a return destination candidate for a case to be conveyed and returned by the carrier from a case processing area to a storage rack area, the information indicating that no case is stored being included in the storage management information;
detecting second positional information based on information indicating completion of case storage and the request for retrieval, the second positional information relating to a storage rack as a candidate from which a case to be conveyed by the carrier toward the case processing area is retrieved, the information indicating completion of case storage being included in the storage management information;
generating a conveyance plan based on a maximum number of cases conveyed by the carrier and arrangement information that includes the first positional information and the second positional information, the conveyance plan including information for designating a case to be conveyed and returned by the carrier in one round, a storage rack as a return destination, and a case to be retrieved; and
outputting the conveyance plan.
